(19) Europäisches Patentamt / European Patent Office / Office européen des brevets

(11) **EP 3 368 935 B1**

(12) **EUROPÄISCHE PATENTSCHRIFT**

(45) Veröffentlichungstag und Bekanntmachung des Hinweises auf die Patenterteilung:
**02.02.2022  Patentblatt 2022/05**

(21) Anmeldenummer: **16781484.7**

(22) Anmeldetag: **14.10.2016**

(51) Internationale Patentklassifikation (IPC):
**G02B 21/33** *(2006.01)*  **G02B 21/34** *(2006.01)*

(52) Gemeinsame Patentklassifikation (CPC):
**G02B 21/33; G02B 21/34**

(86) Internationale Anmeldenummer:
**PCT/EP2016/074786**

(87) Internationale Veröffentlichungsnummer:
**WO 2017/071978 (04.05.2017 Gazette 2017/18)**

(54) **PROBENBEGRENZUNGSELEMENT AUS NANOPORÖSEM MATERIAL FÜR DIE IMMERSIONSMIKROSKOPIE**

SPECIMEN DELIMITING ELEMENT MADE OF NANO-POROUS MATERIAL FOR IMMERSION MICROSCOPY

ÉLÉMENTS DE DÉLIMITATION D'ÉCHANTILLON D'UN MATÉRIAU NANOPOREUX POUR LA MICROSCOPIE À IMMERSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2015  DE 102015221044**

(43) Veröffentlichungstag der Anmeldung:
**05.09.2018  Patentblatt 2018/36**

(73) Patentinhaber: **Carl Zeiss Microscopy GmbH 07745 Jena (DE)**

(72) Erfinder:
• **OHRT, Thomas 07751 Golmsdorf (DE)**
• **KALKBRENNER, Thomas 07745 Jena (DE)**

(74) Vertreter: **Loritz, Rainer Carl Zeiss AG Konzernfunktion Recht und Patente Patentabteilung Jena Carl-Zeiss-Promenade 10 07745 Jena (DE)**

(56) Entgegenhaltungen:
DE-A1-102013 107 298

• YUN-SUK NAM ET AL: "Thick, three-dimensional nanoporous density-graded materials formed by optical exposures of photopolymers with controlled levels of absorption", APPLIED OPTICS, Bd. 46, Nr. 25, 1. September 2007 (2007-09-01), Seite 6350, XP055331779, WASHINGTON, DC; US ISSN: 0003-6935, DOI: 10.1364/AO.46.006350
• XIAO LI ET AL: "Porous Polymer Films with Gradient-Refractive-Index Structure for Broadband and Omnidirectional Antireflection Coatings", ADVANCED FUNCTIONAL MATERIALS, WILEY - V C H VERLAG GMBH & CO. KGAA, DE, Bd. 20, Nr. 2, 22. Januar 2010 (2010-01-22), Seiten 258-265, XP001551594, ISSN: 1616-301X, DOI: 10.1002/ADFM.200901052 [gefunden am 2009-12-15]

EP 3 368 935 B1

**Beschreibung**

Die Erfindung betrifft ein Probenbegrenzungselement gemäß dem Oberbegriff des Anspruchs 1. Die Erfindung betrifft ferner ein Mikroskopierverfahren sowie ein Mikroskop.

In der Mikroskopie bietet der Einsatz von Immersionsobjektiven zahlreiche Vorteile, die sich alle letztendlich aus den höheren erzielbaren numerischen Aperturen der Immersionsobjektive ergeben. Diese Vorteile sind beispielsweise eine höhere räumliche Auflösung, eine höhere Lichtsammeleffizienz, ein besseres Signal-Rausch-Verhältnis beziehungsweise ein besseres Signal-Hintergrund-Verhältnis, kürzere Belichtungszeiten und eine bessere zeitliche Auflösung sowie eine reduzierte phototoxische Wirkung auf biologische Proben. Letzterer Vorteil ist insbesondere bei der Mikroskopie biologischer Proben, beispielsweise von lebenden Zellen und/oder von biologisch aktiven Molekülen, von großer Bedeutung.

Die numerische Apertur kann durch die Verwendung von Immersionsobjektiven im Zusammenwirken mit Immersionsmedien maximiert werden, wobei das jeweilige Immersionsmedium einen möglichst hohen Brechungsindex aufweist. Die zu beobachtende Probe wird dabei mit einem dünnen Deckglas abgedeckt beziehungsweise wird die Probe auf ein Deckglas aufgebracht und das Immersionsmedium wird auf die der Probe abgewandten Seitenfläche des Deckglases aufgetragen. Das Deckglas verhindert ein Durchmischen von Immersionsmedium und Probenmedium sowie eine Kontamination der Probe durch das Immersionsmedium.

Als Immersionsmedien sind beispielsweise Öl, ölartige Substanzen und verformbare transparente Kunststoffe bekannt, wie diese beispielsweise in der DE 14 72 294 A beschrieben werden.

Eine sinnvolle Obergrenze des Brechungsindex des Immersionsmediums ist durch den Brechungsindex des Deckglases gegeben. Sind die Brechungsindizes von Immersionsmedium und Deckglas gleich, so ist das Deckglas optisch nicht mehr wirksam und verursacht bei der Beobachtung der Probe keine Abbildungsfehler.

Typischerweise ist eine solche Anpassung der Brechungsindizes mittels Ölimmersionsobjektiven und Öl als Immersionsmedium erreichbar.

Insbesondere biologische Proben liegen meist in einem Probenmedium vor, um die nativen Eigenschaften der Probe beziehungsweise deren Bestandteile wenigstens zeitweilig zu erhalten.

Weicht der Brechungsindex des Probenmediums von dem Brechungsindex des Deckglases und/oder des Immersionsmediums ab, was bei biologischen Proben oft der Fall ist, kann mit Ölimmersionsobjektiven nur in Fokusebenen sehr nahe des Deckglases optimal gearbeitet werden, da durch den Brechungsindexsprung Aberrationen, hauptsächlich sphärische Aberrationen, auftreten, die mit der Tiefe der Fokusebene in der Probe zunehmen.

Für die Mikroskopie, insbesondere an lebenden Zellen, sind daher Wasserimmersionsobjektive besser geeignet. Da sich die Zellen in einem wässrigen Probenmedium befinden, sind die Brechungsindizes von Immersionsmedium und Probenmedium sehr ähnlich. Lediglich der Brechungsindex des Deckglases weicht ab. Wenn die optische Wirkung des Deckglases auskorrigiert ist, treten beim tieferen Eindringen der Fokusebene in die Probe keine sphärischen Aberrationen auf.

Allerdings ist eine solche Korrektur spezifisch für ein Deckglas bestimmter Dicke, Planarität und Glassorte, weshalb insbesondere Wasserimmersionsobjektive meist mit einer Korrekturfunktionalität ausgestattet sind, mittels der durch Verschieben einer Linse oder Linsengruppe im Immersionsobjektiv herstellungsbedingt unvermeidbare Schwankungen der Deckglasdicke korrigiert werden können.

Da auch Zellen nicht in rein wässriger Lösung mikroskopiert werden und Zellen zudem einen anderen Brechungsindex als das Probenmedium aufweisen, sind verschiedenste Immersionsmedien erhältlich. Typische Immersionsmedien für die Mikroskopie lebender Zellen sind Wasser, organische Ersatzmedien für Wasser, Glycerin, TDE und spezielle Immersionsöle wie z.B. Silikonöl.

Alle Immersionsmedien sind bei gebräuchlicher Temperatur flüssig. Nur wenn das Immersionsmedium exakt die gleichen optischen Parameter wie das Probenmedium aufweist, wird eine optimale Bildqualität sowie maximale Signalintensität und Eindringtiefe erreicht.

Bei der Verwendung von Immersionsobjektiven und bei der Mikroskopie mittels Immersionsmedien treten daher Einschränkungen und Nachteile auf. So besitzt das Deckglas meist andere optische Eigenschaften als das Immersionsmedium, sodass Spezialobjektive, insbesondere Immersionsobjektive, erforderlich sind. Das Immersionsmedium besitzt meist andere optische Eigenschaften als das Probenmedium, wodurch sich die Leistungsfähigkeit auch der Spezialobjektive verringert. Es ergeben sich hauptsächlich sphärische Aberrationen und chromatische Aberrationen bei höheren Eindringtiefen der Fokusebene.

Aber selbst auskorrigierte Spezialobjektive sind sehr sensitiv für deckglasinduzierte Fehler. Solche Fehler sind beispielsweise auftretende Aberrationen aufgrund eines schief in dem Strahlengang des Mikroskops platzierten Deckglases. Aberration treten auch auf, wenn die Seitenflächen nicht parallel zueinander sind oder das Deckglas schief zur optischen Ebene liegt. Ebenso führen Schwankungen der Dicke des Deckglases zu Fehlern, wobei die Stärke der Aberrationen ungefähr proportional mit der Brechzahldifferenz zwischen Deckglas und Immersionsmedium skaliert.

Seitens der Ausführung eines geeigneten Mikroskops muss aus den vorgenannten Gründen für jedes Immersionsmedium ein Spezialobjektiv im Portfolio vorhanden sein. Solche Spezialobjektive sind beispielsweise Ölimmersionsobjektive, Silikonölimmersionsobjektive, Glycerolimmersionsobjektive und Wasserimmersionsobjektive. Mit technisch und wirtschaftlich vertretbarem Aufwand ist pro Spezialobjektiv jeweils nur eine Korrekturfunktionalität implementierbar. Beispielsweise wird entweder eine Deckglasdickenkorrektur oder eine Brechungsindex-Immersionsmedium-Korrektur, beispielsweise mittels eines Multiimmersionsobjektivs, vorgesehen.

Alternativ zu einer Vielzahl von Spezialobjektiven kann ein speziell ausgebildetes Immersionsobjektiv eingesetzt werden, wie dieses beispielsweise aus der DE 26 55 041 C2 bekannt ist. Das dort offenbarte Immersionsobjektiv weist eine längs der optischen Achse verschiebbare Platte aus einem transparenten Material vor der Frontlinse auf. Die Dicke des von einem Immersionsmedium erfüllten Raums zwischen der Platte und einem Deckglas ist zum Zwecke der Korrektur des Brechungsindex unterschiedlicher Immersionsmedien sowie der Dicke des Deckglases einstellbar.

Aus der DE 10 2013 107 297 A1 ist eine Abdeckung einer Probe offenbart, wobei die Abdeckung aus einem nanoporösen Material offener Porosität besteht und für eine mittels eines Mikroskops erfassbare Beobachtungsstrahlung transparent ist. Der mittlere Porendurchmesser des Materials ist kleiner als die Wellenlänge der Beobachtungsstrahlung. In der US 2007/0128069 A1 ist ein poröses Deckglas offenbart, dessen Poren von einer Seitenfläche bis zur gegenüberliegenden Seitenfläche reichen. Das Deckglas ist mit einer ebenfalls durchgehend porösen Membran versehen. Eine ganz ähnliche Membran mit Filterfunktion für Zellen und Zellbestandteile ist aus der DE 10 2011 076 238 A1 bekannt. Nanoporöse Materialien werden außerdem auch auf anderen technischen Gebieten verwendet und beispielsweise in kratzfesten optischen Filtern eingesetzt, wie dies beispielsweise in der US 2013/0170044 A1 und der US 2014/0334006 A1 beschrieben ist. Z

Weiterer Stand der Technik wird beschrieben in YUN-SUK NAM ET AL: "Thick, three-dimensional nanoporous density-graded materials formed by optical exposures of photopolymers with controlled levels of absorption",APPLIED OPTICS, Bd. 46, Nr. 25, 1. September 2007, Seiten 6350-6354, DE102013107298 A1, und XIAO LI ET AL: "Porous Polymer Films with Gradient-Refractive-Index Structure for Broadband and Omnidirectional Antireflection Coatings",ADVANCED FUNCTIONAL MATERIALS, WILEY - V C H VERLAG GMBH & CO. KGAA, DE, Bd. 20, Nr. 2, 22. Januar 2010, Seiten 258-265.

Der Erfindung liegt die Aufgabe zugrunde eine Möglichkeit vorzuschlagen, mittels der die aus dem Stand der Technik bekannten Nachteile und Einschränkungen bei der Mikroskopie unter Verwendung von Immersionsmedien zumindest reduziert werden.

Die Aufgabe wird durch ein Probenbegrenzungselement gemäß dem unabhängigen Anspruch 1, ein Mikroskopierverfahren gemäß dem Anspruch 8 und durch ein Mikroskop gemäß dem Anspruch 10 gelöst. Vorteilhafte Ausgestaltungen sind in den abhängigen Ansprüchen angegeben.

Offenbart wird ein Probenbegrenzungselement das mindestens in einem Bereich aus einem für mindestens eine mittels eines Mikroskops erfassbare Beobachtungsstrahlung transparenten nanoporösen Material besteht, dessen mittlerer Porendurchmesser kleiner als die Wellenlänge der Beobachtungsstrahlung ist. Kennzeichnend für ein erfindungsgemäßes Probenbegrenzungselement ist, dass das nanoporöse Material ein nanoporöses Material mit einer offenen Porosität ist und Poren mit einem mittleren Porendurchmesser von höchstens 1000 nm aufweist. Durch die Poren ist ein Anteil von mindestens 5 % des Volumens des Materials eingenommen. Die Anzahl der Poren je Volumeneinheit des nanoporösen Materials und/oder der mittlere Porendurchmesser verändert beziehungsweise verändern sich entlang wenigstens einer Ausdehnung des Probenbegrenzungselements, so dass in dem Probenbegrenzungselement ein Porengradient ausgebildet ist. Der Porengradient umfasst eine porenfreie Schicht.

Der Anteil des Volumens aller Poren an dem Volumen des Materials wird auch als Volumenfraktion bezeichnet.

Bei einer offenen Porosität stehen die Poren, zumindest ein Großteil dieser, miteinander in Verbindung.

Der mittlere Porendurchmesser wird in einer möglichen Ausführung des Probenbegrenzungselements anhand einer Verteilungsfunktion bestimmt. Derjenige Durchmesser, den 95% aller Poren aufweisen, wird, abzüglich beziehungsweise zuzüglich dessen Standardabweichung, als mittlerer Porendurchmesser bestimmt.

Kern der Erfindung ist ein Probenbegrenzungselement, das die optischen Eigenschaften eines auf dem Probenbegrenzungselement aufgebrachten Immersionsmediums zumindest teilweise übernimmt und durch das gleichzeitig die klassische Funktion eines Deckglases, nämlich die Trennung von Probenmedium und Immersionsmedium, erfüllt ist.

Um die Trennung von Probenmedium und Immersionsmedium sicherzustellen, weist der Porengradient mindestens einen Gradientenabschnitt auf, in dem keine Porosität vorliegt. Derart ist mittels des Probenbegrenzungselements eine Trennung des Probenmediums auf einer Seitenfläche des Probenbegrenzungselements und eines Immersionsmediums auf einer gegenüberliegenden Seitenfläche des Probenbegrenzungselements ermöglicht.

Das erfindungsgemäße Probenbegrenzungselement weist beispielsweise die Abmessungen eines marktüblichen Deckglases von beispielsweise 18X18 mm, 22x22 mm oder 24x40 mm mit Dicken von 0,02 bis 0,21 mm auf. Das Probenbegrenzungselement kann auch mit individuellen Abmaßen, Formgestaltungen und/oder Dicken ausgeführt sein. Das Probenbegrenzungselement kann in weiteren Ausführungen für Multi-Well-Platten oder für Behältnisse wie Petrischalen (dishes) gestaltet sein.

In einer weiteren möglichen Ausführung ist das Probenbegrenzungselement als ein Hohlzylinder ausgeführt.

Diese Ausführung ermöglicht beispielsweise, die Probe im Inneren des Probenbegrenzungselements zu platzieren und die Probe zu mikroskopieren. Diese Formgestaltung des Probenbegrenzungselements ist vorteilhaft bei dem Lichtblattmikroskopierverfahren und/oder der Laserscanningmikroskopie verwendbar.

Die optischen Eigenschaften des Probenbegrenzungselements sind vorteilhaft an unterschiedliche Immersionsmedien anpassbar. Dazu besteht das Probenbegrenzungselement wenigstens bereichsweise aus dem nanoporösen Material. Durch das nanoporöse Material ist ein Bereich des Probenbegrenzungselements gebildet, durch den die Beobachtungsstrahlung bei der Verwendung des Probenbegrenzungselements in einem Mikroskop hindurchtritt.

Aufgrund der hohen effektiven inneren Oberfläche des nanoporösen Materials nimmt das Probenbegrenzungselement das jeweilige Immersionsmedium und/oder das Probenmedium auf. Die mittlere Porengröße der Poren des nanoporösen Materials muss dabei klein gegen die Wellenlänge der Beobachtungsstrahlung sein, damit das mit dem Medium, insbesondere mit dem Immersionsmedium und/oder dem Probenmedium, gefüllte Probenbegrenzungselement ein optisch homogenes Objekt mit einem effektiven Brechungsindex ist, der zwischen dem Brechungsindex des Materials und dem des Immersionsmediums liegt. Der genaue Wert hängt dabei von der jeweiligen Volumenfraktion $\varphi = V_{Material}/V_{Poren}$ ab, wobei $V_{Material}$ das Volumen des Materials und $V_{Poren}$ das Volumen der Poren sind.

Für dielektrische Medien ergibt sich der effektive Brechungsindex $n_{eff}$ in guter Näherung zu:

$$n_{eff} = \sqrt{(1 - \varphi)n_1^2 + \varphi n_2^2} \qquad (1)$$

wobei n1 und n2 die Brechungsindizes (Brechzahlen) der jeweiligen Medien sind.

Neben dem effektiven Brechungsindex $n_{eff}$ ist auch auf die Streueigenschaften des Probenbegrenzungselements zu achten, da die Poren als Streuzentren wirken. Deren Streueigenschaften lassen sich mit der Mie'schen Streutheorie abschätzen, ebenso die Streu- und Extinktionskoeffizienten eines nanoporösen Materials mit Volumenfraktion $\varphi$ und mittlerer Porengröße.

Es ist vorteilhaft, wenn der mittlere Porendurchmesser eine Varianz von nicht mehr als $\pm 10$ Prozent aufweist. Eine geringe Varianz ermöglicht eine präzisere Anpassung des effektiven Brechungsindex $n_{eff}$ und es werden lokale Inhomogenitäten des effektiven Brechungsindex $n_{eff}$ reduziert.

Eine Anpassung des effektiven Brechungsindex $n_{eff}$ ist insbesondere durch die Wahl der Volumenfraktion und/oder des mittleren Porendurchmessers der Poren möglich. Dabei werden zusätzlich das Material des Probenbegrenzungselements und dessen optische Eigenschaften berücksichtigt.

Die Beobachtungsstrahlung ist eine elektromagnetische Strahlung, insbesondere Licht, die mittels einer Detektoreinheit detektierbar ist. Die Detektoreinheit ist beispielsweise das menschliche Auge, eine Kamera, eine Infrarotkamera (IR-Kamera, eine UV-sensitive Kamera (UV = ultraviolettes Licht), eine CCD-Kamera (charge-couple-device), ein Detektor eines Laserscanningmikroskops und/oder ein CMOS-Chip (complementary metal-oxidesemiconductor).

Die Wellenlänge der Beobachtungsstrahlung ist aus einem Wellenlängenbereich von 200 bis 2000 nm ausgewählt, wodurch das Probenbegrenzungselement für einen breiten Einsatzbereich in der Mikroskopie verwendbar ist.

Die Wellenlänge der Beobachtungsstrahlung ist in weiteren Ausführungen des Probenbegrenzungselements aus einem Wellenlängenbereich von 200 bis 850 nm, beispielsweise aus einem Wellenlängenbereich von 380 nm bis 780 nm, ausgewählt.

Der mittlere Porendurchmesser liegt erfindungsgemäss in einem Wertebereich von 0,5 nm bis 100 nm. Um die auftretenden Streueffekte weiter zu verringern, ist der mittlere Porendurchmesser vorteilhaft in einem Wertebereich von 1 nm bis 10 nm gewählt.

Entlang des Porengradienten sind die optischen Eigenschaften des Probenbegrenzungselements in Abhängigkeit der konkreten Gestaltung des Porengradienten einstellbar. Weiterhin ist die Verteilung eines Mediums, beispielsweise eines Immersionsmediums, mittels der Ausgestaltung des beziehungsweise der Porengradienten innerhalb des Probenbegrenzungselements einstellbar.

In einer erfindungsgemässen Ausführung des Probenbegrenzungselements sind in diesem zwei Porengradienten ausgebildet, die jeweils von einer Seitenfläche des Probenbegrenzungselements ausgehen. Die Seitenflächen liegen einander gegenüber, so dass die Porengradienten aufeinander zu laufen. Die Porengradienten sind hinsichtlich der Anzahl der Poren je Volumeneinheit des Materials und/oder des mittleren Porendurchmessers einander gegensätzlich ausgebildet. Insbesondere weist jeder der Porengradienten eine hohe Anzahl der Poren je Volumeneinheit des Materials (Porendichte) und/oder einen großen mittleren Porendurchmesser auf. Die Porendichte und/oder der mittlere Porendurchmesser nimmt beziehungsweise nehmen in Richtung auf die gegenüberliegende Seitenfläche ab.

Durch diese Ausführung ist ein Eindringen des Immersionsmediums beziehungsweise des Probenmediums an den jeweiligen Seitenflächen unterstützt. Die beiden Medien bleiben aber infolge der sehr geringen bis fehlenden Porendichte und/oder der sehr geringen mittleren Porendurchmesser im Inneren des Probenbegrenzungselement, beispielsweise in einer Ebene oder porenfreien Schicht im Inneren des Probenbegrenzungselements, voneinander getrennt.

Das Probenbegrenzungselement, insbesondere dessen Poren, sind in einer weiteren möglichen Ausführung mit einem verfestigten oder flüssigen Medium mit bekannten optischen Eigenschaften gefüllt, wobei das verfestigte beziehungsweise flüssige Medium in dem Probenbegrenzungselement verbleibt.

Ein derartiges Probenbegrenzungselement ist mit angepasstem effektiven Brechungsindex für Wasserimmersionsobjektive oder für sogenannte "LiveCell-Immersionsobjektive" ausgeführt oder ausführbar. Damit lässt sich gegenüber dem Stand der Technik vorteilhaft die optisch optimale Situation des nichtexistenten Probenbegrenzungselements für Proben in Probenmedien wie Pufferlösungen oder Einbettmedien realisieren.

Diese Ausführungsform ermöglicht eine Bereitstellung des Probenbegrenzungselements mit den gewünschten optischen Eigenschaften beispielsweise in Form eines vorbereiteten und sofort verwendbaren Probenbegrenzungselements, welches mit dem verfestigten beziehungsweise flüssigen Medium gefüllt ist. Beispielsweise entfällt ein Verfahrensschritt, in dem das Probenbegrenzungselement mit dem Immersionsmedium benetzt wird und das Immersionsmedium in des Probenbegrenzungselement eindringt, so dass weniger Handhabungsfehler auftreten können und weniger Zeit für die Vorbereitung des eigentlichen Mikroskopiervorgangs benötigt wird.

Das nanoporöse Material kann ein Glas, ein Kunststoff oder eine Kunststoffmischung sein. Die Herstellung nanoporöser Materialien ist beispielsweise aus der US 2003/0229189 A1 bekannt. Das Probenbegrenzungselement kann beispielsweise aus mindestens einem der in der US 2003/0229189 A1 offenbarten nanoporösen Materialien und/oder einem in dem Artikel "Porous and reconstructed Glasses" (T. H: Elmer, 1992, Engineered Materials Handbook, Vol. 4, Ceramic and Glasses: 427 - 432) bestehen.

Um ein Probenbegrenzungselement herzustellen, kann ein nanoporöses Material mit einem mittleren Porendurchmesser von höchstens 1000 nm und einem durch die Poren gebildeten Anteil von mindestens 5 Vol.-% des Materials verwendet werden.

In einer erfindungsgemässen Ausgestaltung der Verwendung nanoporösen Materials zur Herstellung eines Probenbegrenzungselements wird ein nanoporöses Materials verwendet, das für eine Beobachtungsstrahlung transparent ist und dessen mittlerer Porendurchmesser kleiner als die Wellenlänge der Beobachtungsstrahlung ist.

Die Wellenlänge der Beobachtungsstrahlung liegt dabei in einem Wellenlängenbereich von 200 bis 2000 nm, zum Beispiel in einem Wellenlängenbereich von 200 bis 780nm und in weiteren Ausführungen in einem Wellenlängenbereich von 380 nm bis 780 nm.

Die Aufgabe wird ferner in einem Mikroskopierverfahren gelöst. Das Mikroskopierverfahren weist folgende Schritte auf:

Bereitstellen eines erfindungsgemäßen Probenbegrenzungselements und Bereitstellen einer Probe. Das bereitgestellte Probenbegrenzungselement kann bereits mit einem verfestigten oder flüssigen Medium, insbesondere mit einem Immersionsmedium und/oder mit einem Probenmedium gefüllt sein. Die Probe wird mit dem Probenbegrenzungselement begrenzt, beispielsweise abgedeckt oder umfasst. Sind die Poren des Probenbegrenzungselements noch ungefüllt, werden diese mit einem Immersionsmedium und/oder mit einem Probenmedium gefüllt.

Es folgt das Benetzen des Probenbegrenzungselements mit einem Immersionsmedium und ein Inkontaktbringen eines Immersionsobjektivs mit dem Immersionsmedium. Die Probe wird beobachtet, indem mindestens ein Strahl der Beobachtungsstrahlung durch das Immersionsobjektiv und durch das Probenbegrenzungselement hindurch detektiert wird.

Die Detektion der Beobachtungsstrahlung kann mit dem menschlichen Auge vorgenommen werden. In weiteren Ausgestaltungen wird eine bereits oben ausgeführte Detektionseinheit verwendet, mittels der optional neben dem Detektieren der Beobachtungsstrahlung auch deren datentechnische Erfassung, Speicherung und/oder Auswertung ermöglicht wird.

In einer Ausgestaltung des Mikroskopierverfahrens wird als Probe eine in einem Einbettungsmedium eingebettete Probe bereitgestellt.

Die eingebettete Probe wird in einer weiteren Ausgestaltung des Mikroskopierverfahrens mit einem Probenbegrenzungselement abgedeckt, wobei die eingebettete Probe mit einer Poren aufweisenden, also porösen, Seitenfläche des Probenbegrenzungselements in Kontakt gebracht wird.

Diese Ausgestaltung des Mikroskopierverfahrens eignet sich beispielsweise für das automatisierte Mikroskopieren eingebetteter Proben, da gegebenenfalls unter dem Probenbegrenzungselement verbliebene Luft über die Poren entweichen kann und so ein unerwünschter Einschluss von Luftblasen vermieden wird.

Als Immersionsmedium ist beispielsweise ein Immersionsöl, Wasser, Glycerol oder ein Gemisch zum Beispiel aus Wasser und Glycerol verwendbar.

Zur Ausführung des Mikroskopierverfahrens ist ein Mikroskop geeignet, das eine Objektträgerhalterung zur Halterung eines Objektträgers aufweist.

Der Objektträger ist mit einem Probenbegrenzungselement versehen. Dabei ist der Objektträger insbesondere in der Objektträgerhalterung gehalten und eine auf, in, an oder unter dem Objektträger befindliche Probe ist mit dem Probenbegrenzungselement begrenzt.

In einer weitergebildeten Ausführung des erfindungsgemäßen Mikroskops weist dieses eine Immersionsmedienwechselvorrichtung auf.

Die Immersionsmedienwechselvorrichtung umfasst eine Immersionsmedienzuführung zur Zuführung eines Immersionsmediums zu einem erfindungsgemäßen Probenbegrenzungselement. Das Probenbegrenzungselement ist auf dem in der Objektträgerhalterung gehaltenen Objektträger vorhanden, insbesondere ist mit dem Probenbegrenzungselement eine auf dem Objektträger befindliche Probe begrenzt, beispielsweise abgedeckt.

Die Immersionsmedienwechselvorrichtung umfasst weiterhin eine Pumpeneinheit zum gesteuerten Transport des Immersionsmediums von einem Vorratsbehälter durch die Immersionsmedienzuführung zu dem Probenbegrenzungselement und eine Steuerungseinheit zur Ansteuerung der Pumpeneinheit.

Mittels der Immersionsmedienwechselvorrichtung ist ein Austausch des Immersionsmediums ermöglicht, ohne dass dazu die Probe und/oder das Immersionsobjektiv gewechselt werden muss beziehungsweise gewechselt werden müssen.

Ferner ist vorteilhaft eine Korrektur der Aberration ermöglicht, indem bei Bedarf ein aktuell verwendetes Immersionsmedium gegen ein anderes Immersionsmedium mit einem anderen Brechungsindex ausgetauscht wird und somit festgestellt Aberrationen korrigiert werden können.

Beispielsweise ermöglicht die Immersionsmedienwechselvorrichtung in einer weiteren Ausführung eine Temperaturregelung des Immersionsmediums, des Probenbegrenzungselements und/oder der Probe, indem das aktuell verwendete Immersionsmedium kontinuierlich oder zu bestimmten Zeitpunkten austauschbar ist oder ausgetauscht wird.

Das erfindungsgemäße Probenbegrenzungselement, das erfindungsgemäße Mikroskopierverfahren und das erfindungsgemäße Mikroskop sowie die Verwendung nanoporösen Materials zur Herstellung des erfindungsgemäßen Probenbegrenzungselements ermöglichen jeweils vorteilhaft, dass der Brechungsindex des Probenbegrenzungselements dem Brechungsindex des Immersionsmediums angenähert oder annäherbar ist. Aberrationen, die durch Wirkung des Probenbegrenzungselements beispielsweise infolge von Schwankungen der Dicke des Probenbegrenzungselements, Keilfehler und/oder Verkippungen induziert sind, sind vorteilhaft verringert.

Für das erfindungsgemäße Mikroskop ist das Vorhalten eines klassischen Objektiv-Portfolios mit Immersionsobjektiven für die jeweiligen Immersionsmedien nicht mehr erforderlich. Für den Benutzer des Mikroskops ist vorteilhaft eine größere Flexibilität der Nutzung des Immersionsobjektivs beziehungsweise der Immersionsobjektive erreicht. Weiterhin ist die Bildoptimierung automatisierbar und es kann auf eine Korrekturfunktionalität gänzlich verzichtet werden, da die erfindungsgemäßen Probenbegrenzungselemente reduzierte Aberrationen verursachen. Somit kann das Optikdesign des Mikroskops ohne Qualitätsverlust vereinfacht werden.

Die Erfindung wird nachfolgende anhand von Ausführungsbeispielen und Abbildungen näher erläutert. Dabei zeigen:

Fig. 1    eine schematische Darstellung eines ersten Ausführungsbeispiels eines Probenbegrenzungselements zusammen mit einer Probe, einem Immersionsmedium und einem Immersionsobjektiv eines Mikroskops,

Fig. 2    eine schematische Darstellung eines zweiten Ausführungsbeispiels eines Probenbegrenzungselements zusammen mit einer Probe, einem Immersionsmedium und einem Immersionsobjektiv eines Mikroskops,

Fig. 3    eine schematische Darstellung eines dritten Ausführungsbeispiels eines Probenbegrenzungselements zusammen mit einer Probe, einem Immersionsmedium und einem Immersionsobjektiv eines Mikroskops,

Fig. 4    eine schematische Darstellung eines vierten Ausführungsbeispiels eines Probenbegrenzungselements zusammen mit einer Probe, einem Immersionsmedium und einem Immersionsobjektiv eines Mikroskops,

Fig. 5    eine schematische Darstellung eines fünften Ausführungsbeispiels eines Probenbegrenzungselements zusammen mit einer Probe, einem Immersionsmedium, einem Immersionsobjektiv eines Mikroskops und eines Beleuchtungsobjektivs des Mikroskops,

Fig. 6    eine schematische Darstellung eines Ausführungsbeispiels eines Mikroskops mit einer Immersionsmedienwechselvorrichtung,

Fig. 7a   eine schematische Darstellung einer Ausgestaltung eines Mikroskopierverfahrens in einem ersten Verfahrenszustand,

Fig. 7b   eine schematische Darstellung einer Ausgestaltung eines Mikroskopierverfahrens in einem zweiten Verfahrenszustand und

Fig. 7c   eine schematische Darstellung einer Ausgestaltung eines Mikroskopierverfahrens in einem dritten Verfahrenszustand.

Die Ausführungsbeispiele sind anhand schematischer Darstellungen erläutert. Gleiche Bezugzeichen kennzeichnen gleiche technische Elemente.

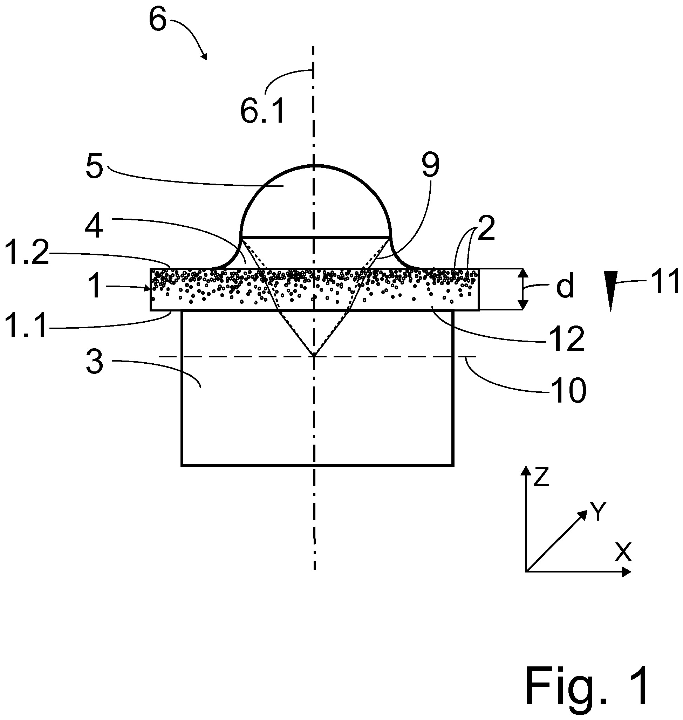

Das in den Fig. 1 bis 5 teilweise dargestellte Mikroskop 6 ist ein für die Mikroskopie unter Verwendung eines Immersionsobjektivs 5 geeignetes Mikroskop 6. Aus Gründen der Übersichtlichkeit ist das Mikroskop 6 nur angedeutet dargestellt und es sind lediglich die für die Beschreibung relevanten Komponenten des Mikroskops 6 gezeigt.

Ein erstes Ausführungsbeispiel eines Probenabdeckelements 1 ist in der Fig. 1 zusammen mit einer Probe 3, einem Immersionsmedium 4 und einem Immersionsobjektiv 5 eines Mikroskops 6 dargestellt.

Das Probenbegrenzungselement 1 ist mit einer Seitenfläche, die als probenseitige Seitenfläche 1.1 bezeichnet wird, auf der Probe 3 aufgelegt und deckt diese nach oben hin ab.

Die Probe 3 besteht aus einem biologischen Material, beispielsweise aus einem Gewebe und ist in ein Probenmedium eingebracht, um das biologische Material an einer Strukturänderung, beispielsweise durch Zusammenfallen infolge fehlenden osmotischen Drucks der Zellen des Gewebes, zu hindern und einer Degradation des biologischen Materials entgegen zu wirken. Durch das Probenmedium werden die nativen Eigenschaften der Probe 3 zumindest zeitweilig erhalten.

Der Begriff der Probe 3 wird verallgemeinernd für ein zu beobachtendes Material, beispielsweise ein biologisches Material, verwendet und schließt ein vorhandenes Probenmedium mit ein.

Auf einer objektivseitigen Seitenfläche 1.2 des Probenbegrenzungselements 1 ist das Immersionsmedium 4 in Form eines Immersionsöls aufgebracht und füllt einen Raum zwischen der objektivseitigen Seitenfläche 1.2 und dem Immersionsobjektiv 5, welches als ein Ölimmersionsobjektiv ausgebildet ist, aus. Außerdem ist ein Anteil des Immersionsmediums 4 in die Poren 2 eingedrungen, so dass das Probenbegrenzungselement 1 mit dem Immersionsmedium 4 gefüllt ist.

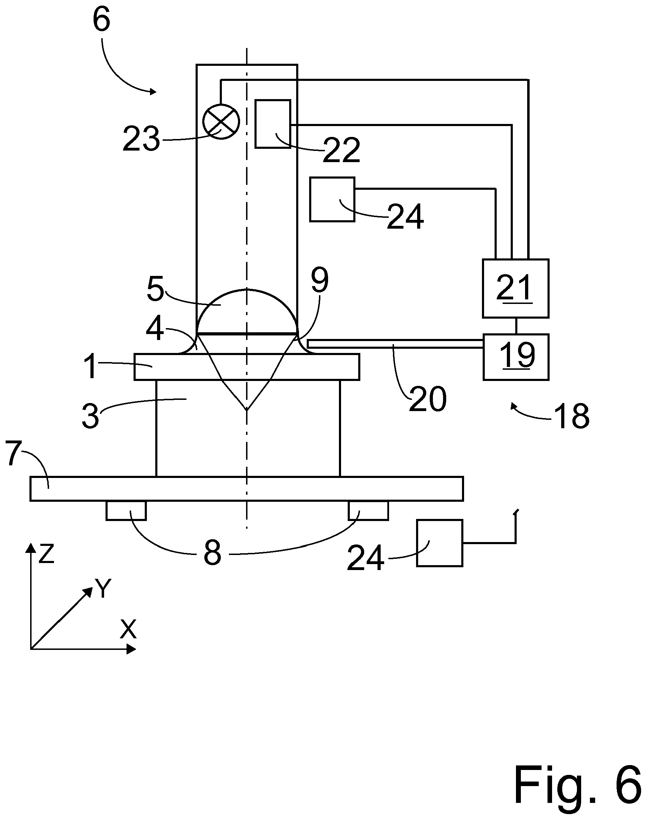

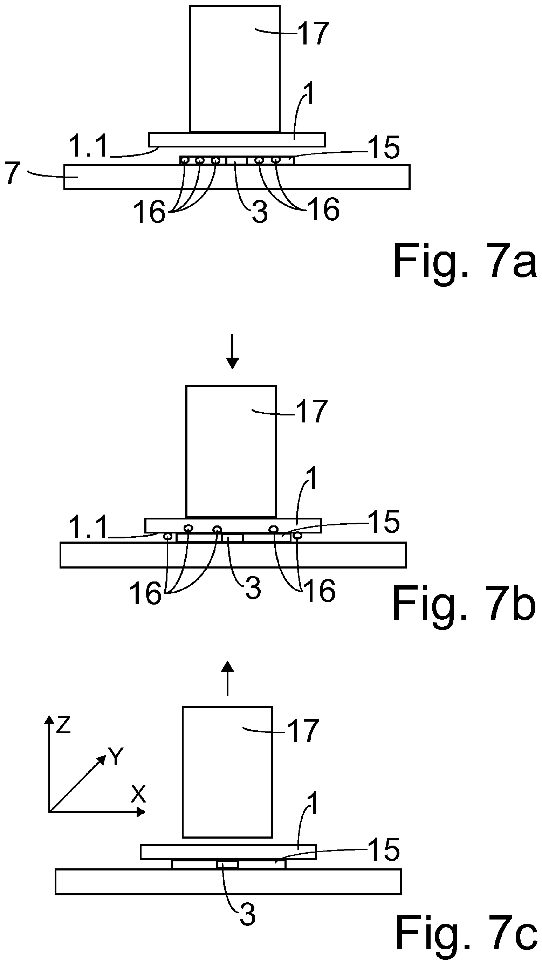

Die Probe 3 befindet sich auf einem Objektträger 7 (siehe Fig. 6 und 7a bis 7c), der von einer Objektträgerhalterung 8 (siehe Fig. 6) des Mikroskops 6 relativ zu einer optischen Achse 6.1 des Mikroskops 6 gehalten ist.

Das Immersionsobjektiv 5 ist an dem Mikroskop 6 entlang der optischen Achse 6.1 in Z-Richtung Z verstellbar angeordnet.

Das Immersionsobjektiv 5 ist derart in Z-Richtung Z eingestellt und in eine Fokusebene 10 fokussiert, dass eine Beobachtungsstrahlung 9 aus der Fokusebene 10 durch das Probenbegrenzungselement 1, das Immersionsmedium 4, das Immersionsobjektiv 5 und nicht dargestellte weitere optische Elemente des Mikroskops 6 detektierbar ist.

Die Beobachtungsstrahlung 9 ist durch den Verlauf der Randstrahlen eines Strahlenbündels der Beobachtungsstrahlung 9 mit Volllinien dargestellt. Der Verlauf der Randstrahlen gibt schematisch die Brechungsverhältnisse der Beobachtungsstrahlung 9 beim Übergang von der Probe 3 zum Probenbegrenzungselement 1 sowie vom Probenbegrenzungselement 1 zum Immersionsmedium 4 an.

Lediglich zum Vergleich ist in der Fig. 1 der Verlauf der Randstrahlen eines Strahlenbündels der Beobachtungsstrahlung 9 mit gestrichelten Linien dargestellt, wie sich dieser bei der Verwendung eines herkömmlichen Deckglases darstellen würde.

Es ist zu sehen, dass insbesondere an der Grenze zwischen Immersionsmedium 4 und Probenbegrenzungselement 1 die Beobachtungsstrahlung 9 bei der Verwendung eines herkömmlichen Deckglases stärker gebrochen wird, als dies bei der Verwendung eines erfindungsgemäßen Probenbegrenzungselements 1 der Fall ist.

Das Probenbegrenzungselement 1 besteht aus einem nanoporösen Material mit einer offenen Porosität, wobei das nanoporöse Material entlang eines Porengradienten 11 (durch ein Dreieck symbolisiert) mit Poren 2 durchsetzt ist. Die Poren 2 sind ausgehend von der objektivseitigen Seitenfläche 1.2 in Richtung auf die gegenüberliegende probenseitige Seitenfläche 1.1 mit einer abnehmenden Porendichte, also mit einer abnehmenden Anzahl von Poren 2 je Volumeneinheit des nanoporösen Materials, verteilt. An der probenseitigen Seitenfläche 1.1 ist in dem nanoporösen Material eine porenfreie Schicht 12 ausgebildet, durch die eine Vermischung des die Poren 2 ausfüllenden Immersionsmediums 4 mit der Probe 3 beziehungsweise mit dem Probenmedium verhindert ist.

Die Poren 2 weisen einen mittleren Porendurchmesser von 5 nm auf. Der als Volumenfraktion $\varphi$ bezeichnete (mittlere) Anteil des Volumens der Poren an dem Volumen des nanoporösen Materials des Probenbegrenzungselements 1 beträgt im Ausführungsbeispiel 0,2 oder 20%.

Aufgrund des mittleren Porendurchmessers von 5 nm und der Volumenfraktion $\varphi$ von 0,2 ist nach der Mie'schen Streutheorie ein Streukoeffizient von 0.0028 /mm ermittelt worden. Bei einer Dicke d des Probenbegrenzungselement 1 von 0,17 mm ist der ermittelte Streukoeffizient kaum nachteilig.

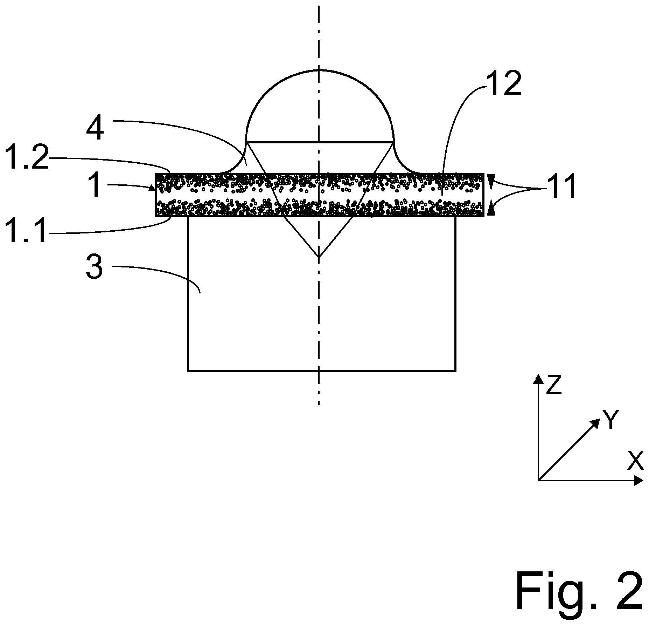

Ein zweites Ausführungsbeispiel des erfindungsgemäßen Probenbegrenzungselements 1 ist in einem zweiten Ausführungsbeispiel in der Fig. 2 mit zwei einander gegensätzlich ausgebildeten Porengradienten 11 dargestellt. Je ein Porengradient 11 ist ausgehend von der probenseitigen Seitenfläche 1.1 beziehungsweise von der objektivseitigen Seitenfläche 1.2 in Z-Richtung Z ausgebildet. Dabei nimmt in jedem der Porengradienten 11 die Porendichte zur Mitte des Probenbegrenzungselements 1 hin ab, so dass in der Mitte des Probenbegrenzungselements 1 eine porenfreie Schicht 12 vorhanden ist. Durch die porenfreie Schicht 12 ist eine Vermischung oder Kontamination von Probe 3 beziehungsweise Probenmedium und Immersionsmedium 4 verhindert.

Von der probenseitigen Seitenfläche 1.1 her kann die Probe 3 in die Poren 2 des von der probenseitigen Seitenfläche 1.1 ausgehenden Porengradienten 11 eindringen beziehungsweise ist die Probe 3 in die Poren 2 eingedrungen.

Das Immersionsmedium 4 kann in die Poren 2 des von der objektivseitigen Seitenfläche 1.2 ausgehenden Porengradienten 11 eindringen beziehungsweise das Immersionsmedium 4 ist in die Poren 2 eingedrungen.

In weiteren Ausführungen des Probenbegrenzungselements 1 ist wenigstens einer der Porengradienten 11 ausgebildet, indem zusätzlich oder alternativ zur sich verändernden Porendichte der mittlere Porendurchmesser der Poren 2 verändert ist.

Außerdem ist der Porengradient 11 beziehungsweise sind die Porengradienten 11 in weiteren Ausführungen des Probenbegrenzungselements 1 in einer Ausdehnung des Probenbegrenzungselements 1 in einer X-Richtung X und/oder in einer Y-Richtung Y ausgebildet.

Sind in einem Probenbegrenzungselement 1 mehrere Porengradienten 11 ausgebildet, können diese in weiteren Ausführungen des Probenbegrenzungselements 1 zu einander gleich ausgebildet sein. Beispielsweise nimmt die Porendichte und/oder der mittlere Porendurchmesser der Porengradienten 11 in der gleichen X-, Y- und/oder Z-Richtung zu oder ab.

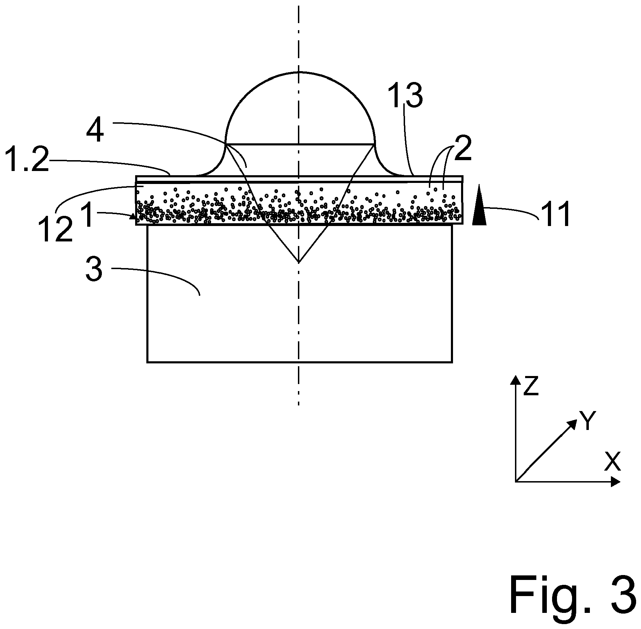

Zusätzlich kann das erfindungsgemäße Probenbegrenzungselement 1 eine oder mehrere Abschlussschichten 13 aufweisen, wie dies in der Fig. 3 als ein drittes Ausführungsbeispiel des Probenbegrenzungselements 1 dargestellt ist. Das Probenbegrenzungselement 1 weist eine flüssigkeitsdichte Abschlussschicht 13 an der objektivseitigen Seitenfläche 1.2 auf.

Die Abschlussschicht 13 verhindert zusätzlich zur porenfreien Schicht 12 das Eindringen des Immersionsmediums 4 in die Poren 2 während die Probe 3 in die Poren 2 eindringen kann beziehungsweise eingedrungen ist. Die Abschlussschicht 13 hält zusammen mit der porenfreien Schicht 12 das Immersionsmedium 4 und die Probe 3 voneinander getrennt.

Die Abschlussschicht 13 ist in weiteren Ausführungen durch eine Membran und/oder durch eine Beschichtung gebildet. Die Abschlussschicht 13 kann weiterhin eine funktionale Beschichtung sein und Zellwachstum ermöglichen.

In weiteren Ausführungen des Probenbegrenzungselements 1 ist die Abschlussschicht 13 an oder auf der probenseitigen Seitenfläche 1.1 ausgebildet.

Eine Abschlussschicht 13 an einer der Seitenflächen 1.1, 1.2 kann durch ein kurzes Erhitzen und eine damit einhergehende Gefügeveränderung des nanoporösen Materials hergestellt werden. In weiteren Ausführungen wird eine Abschlussschicht 13 beispielsweise mittels Bedrucken, Lackieren, Sputtern, Bekleben, Spincoating und/oder Laminieren auf der Seitenfläche 1.1, 1.2 hergestellt.

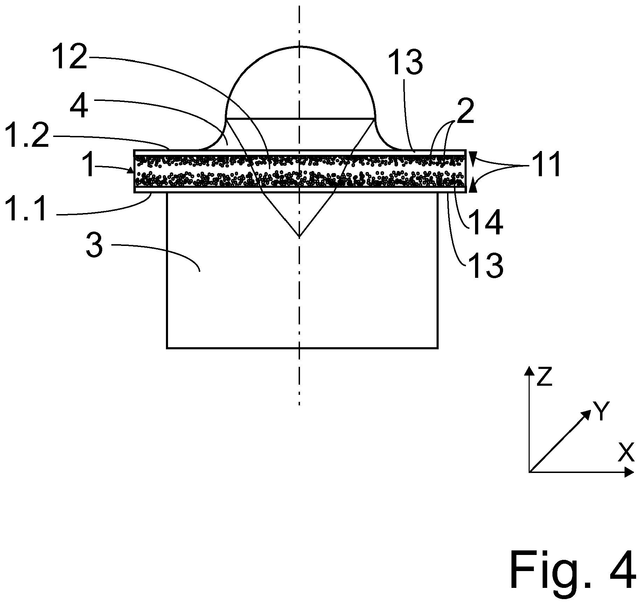

Ein Probenbegrenzungselement 1 mit je einer Abschlussschicht 13 sowohl auf der probenseitigen Seitenfläche 1.1 als auch auf der objektivseitigen Seitenfläche 1.2 ist in der Fig. 4 dargestellt.

Die Poren 2 sind dabei mit einem verfestigten oder einem flüssigen Medium 14 gefüllt, das bekannte optische Eigenschaften besitzt. Der Brechungsindex eines solchen Probenbegrenzungselements 1 ist optimal auf einen gewünschten effektiven Brechungsindex $n_{eff}$, beispielsweise den von Wasser, einstellbar. Das derart eingestellte Probenbegrenzungselement 1 ist für das Mikroskopieren unmittelbar einsetzbar und kann bereits vorgefertigt bereitgestellt werden oder bereitgestellt sein. Das jeweilige Medium 14 in den Porengradienten 11 kann unterschiedliche optische Eigenschaften besitzen und beispielsweise an ein Probenmedium beziehungsweise an ein Immersionsmedium 4 angepasst sein.

In weiteren möglichen Ausführungen sind alle Seitenflächen mit einer Abschlussschicht 13 versehen. Die Poren 2 sind mit einem verfestigten oder einem flüssigen Medium 14 mit bekannten optischen Eigenschaften gefüllt, das in dem Probenbegrenzungselement 1 verbleibt.

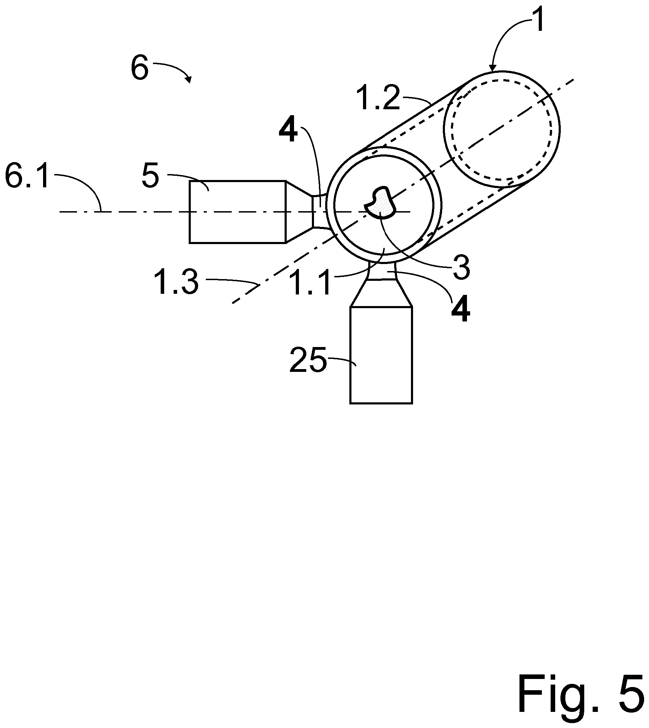

Bei einem in der Fig. 5 dargestellten fünften Ausführungsbeispiel des Probenbegrenzungselements 1 ist dieses als ein Hohlzylinder ausgebildet, dessen innere Zylinderfläche die probenseitige Seitenfläche 1.1 und dessen äußere Zylinderfläche die objektivseitige Seitenfläche 1.2 ist.

Das Immersionsobjektiv 5 des Mikroskops 6 ist mit seiner optischen Achse 6.1 orthogonal zur Zylinderlängsachse 1.3 des Probenbegrenzungselements 1 ausgerichtet und steht über das Immersionsmedium 4 mit der objektivseitigen Seitenfläche 1.2 in Kontakt.

Zusätzlich ist ein Beleuchtungsobjektiv 25 des Mikroskops 6 sowohl orthogonal zur Zylinderlängsachse 1.3 als auch zur optischen Achse 6.1 ausgerichtet vorhanden.

In dem Probenbegrenzungselement 1 ist eine vereinfacht dargestellte Probe 3 vorhanden und durch die Seitenflächen 1.1, 1.2 umfangen. Die Probe 3 ist mittels des Beleuchtungsobjektivs 25 beleuchtet oder beleuchtbar.

Sind die optische Achse 6.1 des Immersionsobjektivs 5 und die durch das Beleuchtungsobjektiv 25 bewirkte Beleuchtung in denselben Raum innerhalb des Probenbegrenzungselements 1 gerichtet, kann die derart beleuchtete Probe 3 durch das Immersionsobjektiv 5 beobachtet werden.

Dabei ist es zur Vermeidung unerwünschter Streustrahlung aus außerfokalen Bereichen der Probe 3 von Vorteil, wenn die Beleuchtung in einem eng begrenzten Volumen, beispielsweise in einem sogenannten Lichtblatt (light sheet), bewirkt wird.

Die Poren 2 können in dem Probenbegrenzungselement 1 derart verteilt und ausgebildet sein, wie dies bereits zu einem der ersten bis vierten Ausführungsbeispielen erläutert wurde.

Die in der Fig. 5 dargestellte Anordnung stellt neben dem fünften Ausführungsbeispiel des Probenbegrenzungselements 1 schematisch ein Mikroskop 6 in Form eines Lichtblattmikroskops und/oder ein Laserscanningmikroskops dar.

Um das Probenbegrenzungselement 1 effektiv verwenden zu können, ist ein modifiziertes Mikroskop 6 von Vorteil, wie dieses in der Fig. 6 dargestellt ist.

Das Mikroskop 6 weist eine Objektträgerhalterung 8 zur Halterung eines Objektträgers 7 auf. Weiterhin ist eine Immersionsmedienwechselvorrichtung 18 vorhanden. Diese umfasst eine Immersionsmedienzuführung 20 zur Zuführung des Immersionsmediums 4 zu dem Probenbegrenzungselement 1. Die Immersionsmedienzuführung 20 steht mit einer Pumpeneinheit 19 zum gesteuerten Transport des Immersionsmediums 4 von einem nicht dargestellten Vorratsbehälter durch die Immersionsmedienzuführung 20 zu dem Probenbegrenzungselement 1 in Verbindung. Die Pumpeneinheit 19 ist mittels einer Steuerungseinheit 21 ansteuerbar.

Mittels einer Lichtquelle 23 ist eine Beleuchtungsstrahlung und/oder eine Anregungsstrahlung erzeugbar und bereitstellbar. Mittels der bereitgestellten Beleuchtungsstrahlung und/oder der Anregungsstrahlung ist die Probe 3 beleuchtbar und/oder anregbar.

Die Beobachtungsstrahlung 9 ist mittels einer Detektionseinheit 22 detektierbar. Die Lichtquelle 23 und die Detektionseinheit 22 stehen mit der Steuerungseinheit 21 in einer zum Austausch von Daten geeigneten Verbindung und sind mittels der Steuerungseinheit 21 ansteuerbar. Daten der detektierten Beobachtungsstrahlung 9 sind durch die Detektionseinheit 22 an die Steuerungseinheit 21 übermittelbar. Die Steuerungseinheit 21 ist dazu ausgebildet, die übermittelten Daten der detektierten Beobachtungsstrahlung 9 zu speichern und/oder auszuwerten.

In Abhängigkeit der Daten der detektierten Beobachtungsstrahlung 9 und/oder in Abhängigkeit der bei deren Auswertung ermittelten Ergebnisse sind die Pumpeneinheit 19, die Detektionseinheit 22, die Lichtquelle 23, ein Antrieb 24 zur Verstellung des Immersionsobjektivs 5 in Z-Richtung Z und/oder optional ein Antrieb 24 zur Verstellung der Objektträgerhalterung 8 in einer X-Y-Ebene XY ansteuerbar.

Die Beobachtungsstrahlung 9 kann dabei ein reflektierter Anteil der Beleuchtungsstrahlung und/oder der Anregungsstrahlung sein. In weiteren Ausführungen des Mikroskops 6 und in weiteren Ausgestaltungen eines Mikroskopierverfahrens ist die Beobachtungsstrahlung 9 eine durch die Anregungsstrahlung bewirkte Strahlung wie eine Fluoreszenzstrahlung.

Optional ist in einer weiteren Ausführung des Mikroskops 6 eine Immersionsmedienabführung zum Abtransport des ausgetauschten Immersionsmediums 4 vorgesehen.

Ferner ist in einer weiteren Ausführung des Mikroskops 6 mindestens ein Sensor zur Temperaturerfassung des Probenbegrenzungselements 1, der Probe 3 und/oder des Immersionsmediums 4 vorhanden.

Die vorstehend beschriebenen Ausführungen des Probenbegrenzungselements 1, optional zusammen mit Ausführungen des Mikroskops 6, sind in einem Mikroskopierverfahren verwendbar. Dazu werden ein Probenbegrenzungselement 1 und eine zu beobachtende Probe 3 bereitgestellt. Die Probe 3 wird auf den Objektträger 7 aufgetragen oder aufgelegt und mit dem Probenbegrenzungselement 1 begrenzt, beispielsweise abgedeckt oder umfasst. Anschließend wird die objektivseitige Seitenfläche 1.2 mit dem Immersionsmedium 4 benetzt. Das Immersionsobjektiv 5 wird mit dem Immersionsmedium 4 in Kontakt gebracht. Zum Erzeugen, Anregen und/oder Bereitstellen der Beobachtungsstrahlung 9 wird die Probe mit der Beleuchtungsstrahlung und/oder mit der Anregungsstrahlung beleuchtet.

Die Probe 3 wird beobachtet, indem mindestens ein Strahl der Beobachtungsstrahlung 9 durch das Immersionsobjektiv 5 und durch das Probenbegrenzungselement 1 hindurch detektiert wird.

Das Mikroskopierverfahren ist in einer möglichen Ausgestaltung dazu geeignet, eingebettete Proben 3 zu beobachten. Vor der Beobachtung wird die in einem Einbettungsmedium 15 eingebettete Probe 3 bereitgestellt, wie dies in der Fig. 7a dargestellt ist. In dem Einbettungsmedium 15 sind unerwünschte Luftblasen 16 enthalten.

Das Probenbegrenzungselement 1, dessen probenseitige Seitenfläche 1.1 porös ist und keine flüssigkeitsdichte Abschlussschicht 13 aufweist, wird mittels eines Manipulators 17 in Z-Richtung Z auf die eingebettete Probe 3 aufgesetzt, wie dies in der Fig. 7b dargestellt ist. Infolge der dabei auftretenden Krafteinwirkungen auf die eingebettete Probe 3 werden einige der Luftblasen 16 seitlich in X- und/oder Y-Richtung X, Y aus der eingebetteten Probe 3 herausgedrückt.

Luftblasen 16, die nicht seitlich herausgedrückt werden, treten durch die probenseitige Seitenfläche 1.1 in das Probenbegrenzungselement 1 ein, gelangen durch die Poren 2 (siehe Fig. 1 bis 4) des Probenbegrenzungselements 1 in eine Umgebung der Probe 3 und werden auf diese Weise aus der eingebetteten Probe 3 entfernt.

In der Fig. 7c ist der Manipulator 17 in Z-Richtung Z von dem Probenbegrenzungselement 1 abgehoben und wird entfernt. Die eingebettete Probe 3 ist durch das Probenbegrenzungselement 1 abgedeckt.

Das Probenbegrenzungselement 1 nimmt den Brechungsindex des Einbettungsmediums 15 an. Im weiteren Mikroskopierverfahren wird ein Immersionsmedium 4 gewählt und auf das Probenbegrenzungselement 1 aufgebracht, dessen Brechungsindex zum Brechungsindex Einbettungsmediums 15 passt, also diesem ähnlich oder gleich ist.

Sowohl das Abdecken der eingebetteten Probe 3 als auch der Austausch des Immersionsmediums 4 sind in weiteren Ausgestaltungen des Verfahrens automatisiert.

Bezugszeichen

| | |
|---|---|
| 1 | Probenbegrenzungselement |
| 1.1 | probenseitige Seitenfläche |
| 1.2 | objektivseitige Seitenfläche |
| 1.3 | Zylinderlängsachse |
| 2 | Pore |
| 3 | Probe |
| 4 | Immersionsmedium |
| 5 | Immersionsobjektiv |
| 6 | Mikroskop |
| 6.1. | optische Achse |
| 7 | Objektträger |
| 8 | Objektträgerhalterung |
| 9 | Beobachtungsstrahl |
| 10 | Fokusebene |
| 11 | Porengradient |
| 12 | porenfreie Schicht |
| 13 | Abschlussschicht |
| 14 | Medium |
| 15 | Einbettungsmedium |
| 16 | Luftblase |
| 17 | Manipulator |
| 18 | Immersionsmedienwechselvorrichtung |
| 19 | Pumpeneinheit |
| 20 | Immersionsmedienzuführung |
| 21 | Steuerungseinheit |
| 22 | Detektionseinheit |
| 23 | Lichtquelle |
| 24 | Antrieb |
| 25 | Beleuchtungsobjektiv |
| d | Dicke |

**Patentansprüche**

1. Probenbegrenzungselement (1) für die Mikroskopie, das mindestens in einem Bereich aus einem für mindestens eine aus einem Wellenlängenbereich von 200 bis 2000 nm ausgewählte Beobachtungsstrahlung (9) transparenten nanoporösen Material besteht, wobei das nanoporöse Material Poren (2) aufweist, deren mittlerer Porendurchmesser kleiner als die Wellenlänge der Beobachtungsstrahlung (9) ist und

   - durch die Poren (2) des nanoporösen Materials ein Anteil von mindestens 5% dessen Volumens eingenommen ist, **dadurch gekennzeichnet, dass**
   - das nanoporöse Material eine offene Porosität aufweist,
   - der mittlere Porendurchmesser in einem Wertebereich von 0,5 nm bis 100 nm liegt, wobei der mittlere Porendurchmesser anhand einer Verteilungsfunktion als Durchmesser von 95% aller Poren zuzüglich beziehungsweise abzüglich dessen Standardabweichung bestimmt ist,
   - sich die Anzahl der Poren (2) je Volumeneinheit des nanoporösen Materials und/oder der mittlere Porendurchmesser entlang wenigstens einer Ausdehnung des Probenbegrenzungselements (1) verändert beziehungsweise verändern, so dass in dem Probenbegrenzungselement (1) ein Porengradient (11) ausgebildet ist,
   - der Porengradient (11) mindestens einen Gradientenabschnitt (11.1) aufweist, in dem keine Porosität vorliegt, sodass mittels des Probenbegrenzungselements (1) eine Trennung eines Probenmediums (3) auf einer Seitenfläche (1.1, 1.2) des Probenbegrenzungselements (1) und eines Immersionsmediums (4) auf einer gegenüberliegenden Seitenfläche (1.1, 1.2) des Probenbegrenzungselements (1) Z erfolgen kann und ausgehend von zwei sich gegenüberliegenden Seitenflächen (1.1, 1.2) des Probenbegrenzungselements (1) je ein Porengradient (11) ausgebildet ist, wobei die Porengradienten (11) hinsichtlich der Anzahl der Poren (2) je Volumeneinheit des Materials und/oder des mittleren Porendurchmessers einander gegensätzlich ausgebildet sind.

2. Probenbegrenzungselement (1) nach Anspruch 1, **dadurch gekennzeichnet, dass** der mittlere Porendurchmesser in einem Wertebereich von 1 nm bis 10 nm liegt.

3. Probenbegrenzungselement (1) nach einem der vorhergehenden Ansprüche, **gekennzeichnet durch** eine Füllung der Poren (2) mit einem verfestigtem oder flüssigen Medium bekannter optischer Eigenschaften, wobei das verfestigte oder flüssige Medium in dem Probenbegrenzungselement (1) verbleibt.

4. Probenbegrenzungselement (1) nach einem der vorhergehenden Ansprüche, **dadurch gekennzeichnet, dass** das nanoporöse Material ein Glas, ein Kunststoff oder eine Kunststoffmischung ist.

5. Mikroskopierverfahren aufweisend die Schritte:

   - Bereitstellen eines Probenbegrenzungselements (1) nach einem der Ansprüche 1 bis 3,
   - Bereitstellen einer Probe (3),
   - Abdecken der Probe (3) mit dem Probenbegrenzungselement (1),
   - Füllen der Poren (2) des Probenbegrenzungselements (1) mit einem Immersionsmedium (4) und/oder mit einem Probenmedium (3),
   - Benetzen des Probenbegrenzungselements (1) mit einem Immersionsmedium (4),
   - Inkontaktbringen eines Immersionsobjektivs (5) mit dem Immersionsmedium (4) und
   - Beobachten der Probe (3), indem mindestens ein Strahl der Beobachtungsstrahlung (9) durch das Immersionsobjektiv (5) und durch das Probenbegrenzungselement (1) detektiert wird.

6. Mikroskopierverfahren nach Anspruch 5, **dadurch gekennzeichnet, dass** als Probe (3) eine in einem Einbettungsmedium (15) eingebettete Probe (3) bereitgestellt wird.

7. Mikroskop (6) nach Anspruch 6 **gekennzeichnet durch**

   - eine Objektträgerhalterung (8) zur Halterung eines Objektträgers (7), wobei der Objektträger (7) mit einem Probenbegrenzungselement (1) nach einem der Ansprüche 1 bis 3 versehen ist,
   - eine Immersionsmedienwechselvorrichtung (18), wobei die Immersionsmedienwechselvorrichtung (18)
   - eine Immersionsmedienzuführung (20) zur Zuführung eines Immersionsmediums (4) zu einem Probenbegrenzungselement (1) nach einem der Ansprüche 1 bis 47,
   - eine Pumpeneinheit (19) zum gesteuerten Transport des Immersionsmediums (4) von einem Vorratsbehälter durch die Immersionsmedienzuführung (20) zu dem Probenbegrenzungselement (1) und
   - eine Steuerungseinheit (21) zur Ansteuerung der Pumpeneinheit (19) umfasst.

## Claims

1. Specimen delimiting element (1) for microscopy, said specimen delimiting element, at least in one region, consisting of a nano-porous material which is transparent to at least one observation radiation (9) selected from a wavelength range of 200 to 2000 nm, wherein the nano-porous material has pores (2), the mean pore diameter of which is smaller than the wavelength of the observation radiation (9), and

   - a proportion of at least 5% of the volume of the nano-porous material is taken up by the pores (2) of the nano-porous material, **characterized in that**
   - the nano-porous material has an open porosity,
   - the mean pore diameter is in a value range of 0.5 nm to 100 nm, wherein the mean pore diameter is determined on the basis of a distribution function as diameter of 95% of all pores plus and/or minus the standard deviation thereof,
   - the number of pores (2) per unit volume of the nano-porous material and/or the mean pore diameter changes or change along at least one extent of the specimen delimiting element (1), such that a pore gradient (11) is formed in the specimen delimiting element (1),

- the pore gradient (11) has at least one gradient portion (11.1) in which no porosity is present, such that a separation of a specimen medium (3) on one side surface (1.1, 1.2) of the specimen delimiting element (1) and an immersion medium (4) on an opposite side surface (1.1, 1.2) of the specimen delimiting element (1) can be effected by means of the specimen delimiting element (1), and a respective pore gradient (11) is formed proceeding from two mutually opposite side surfaces (1.1, 1.2) of the specimen delimiting element (1), wherein the pore gradients (11) are formed in a mutually opposing fashion with regard to the number of pores (2) per unit volume of the material and/or the mean pore diameter.

2. Specimen delimiting element (1) according to Claim 1, **characterized in that** the mean pore diameter is in a value range of 1 nm to 10 nm.

3. Specimen delimiting element (1) according to any one of the preceding claims, **characterized by** a filling of the pores (2) with a solidified or liquid medium having known optical properties, wherein the solidified or liquid medium remains in the specimen delimiting element (1) .

4. Specimen delimiting element (1) according to any one of the preceding claims, **characterized in that** the nano-porous material is a glass, a plastic or a plastics mixture.

5. Microscopy method comprising the following steps:

    - providing a specimen delimiting element (1) according to any one of Claims 1 to 3,
    - providing a specimen (3),
    - covering the specimen (3) with the specimen delimiting element (1),
    - filling the pores (2) of the specimen delimiting element (1) with an immersion medium (4) and/or with a specimen medium (3),
    - wetting the specimen delimiting element (1) with an immersion medium (4),
    - contacting an immersion objective (5) with the immersion medium (4), and
    - observing the specimen (3) by detecting at least one beam of the observation radiation (9) through the immersion objective (5) and through the specimen delimiting element (1).

6. Microscopy method according to Claim 5, **characterized in that** a specimen (3) embedded in an embedding medium (15) is provided as the specimen (3).

7. Microscope (6) according to Claim 6, **characterized by**

    - a specimen slide mount (8) for mounting a specimen slide (7), wherein the specimen slide (7) is provided with a specimen delimiting element (1) according to any one of Claims 1 to 3,
    - an immersion media interchange device (18), wherein the immersion media interchange device (18) comprises
    - an immersion media feed (20) for feeding an immersion medium (4) to a specimen delimiting element (1) according to any one of Claims 1 to 4,
    - a pump unit (19) for the controlled transport of the immersion medium (4) from a supply container through the immersion media feed (20) to the specimen delimiting element (1), and
    - a control unit (21) for driving the pump unit (19) .

**Revendications**

1. Élément de délimitation d'échantillon (1) destiné à la microscopie, ledit élément comprenant au moins dans une zone un matériau nano-poreux qui est transparent pour au moins un rayonnement d'observation (9) choisi dans une gamme de longueurs d'onde allant de 200 à 2000 nm, le matériau nano-poreux comportant des pores (2) dont le diamètre moyen est inférieur à la longueur d'onde du rayonnement d'observation (9) et

    - une fraction d'au moins 5 % du volume du matériau nano-poreux étant prise par les pores (2) de celui-ci, **caractérisé en ce que**
    - le matériau nano-poreux a une porosité ouverte,
    - le diamètre moyen des pores est situé dans une gamme de valeurs allant de 0,5 nm à 100 nm, le diamètre moyen des pores étant déterminé, à l'aide d'une fonction de distribution, comme étant le diamètre de 95 % de tous les pores plus ou moins son écart type,

- le nombre de pores (2) par unité de volume du matériau nano-poreux et/ou le diamètre moyen des pores le long d'au moins une extension de l'élément de délimitation d'échantillon (1) varient de façon à former un gradient de pores (11) dans l'élément de délimitation d'échantillon (1),
- le gradient de pores (11) comporte au moins une portion de gradient (11.1) dans laquelle il n'y a pas de porosité de sorte qu'une séparation d'un milieu d'échantillon (3) sur une surface latérale (1.1, 1.2) de l'élément de délimitation d'échantillon (1) et d'un milieu d'immersion (4) sur une surface latérale opposée (1.1, 1.2) de l'élément de délimitation d'échantillon (1) puisse être effectuée au moyen de l'élément de délimitation d'échantillon (1),

et un gradient de pores (11) est formé à partir de deux surfaces latérales opposées (1.1, 1.2) de l'élément de délimitation d'échantillon (1), le gradient de pores (11) relatif au nombre de pores (2) par unité de volume du matériau et/ou celui relatif au diamètre moyen des pores étant formés à l'opposé l'un de l'autre.

2. Élément de délimitation d'échantillon (1) selon la revendication 1, **caractérisé en ce que** le diamètre moyen des pores est situé dans une gamme de valeurs allant de 1 nm à 10 nm.

3. Élément de délimitation d'échantillon (1) selon l'une des revendications précédentes, **caractérisé par** un remplissage des pores (2) avec un milieu solidifié ou liquide ayant des propriétés optiques connues, le milieu solidifié ou liquide restant dans l'élément de délimitation d'échantillon (1).

4. Élément de délimitation d'échantillon (1) selon l'une des revendications précédentes, **caractérisé en ce que** le matériau nano-poreux est un verre, une matière synthétique ou un mélange de matières synthétiques.

5. Procédé de microscopie comprenant les étapes suivantes :

- fournir un élément de délimitation d'échantillon (1) selon l'une des revendications 1 à 3,
- fournir un échantillon (3),
- recouvrir l'échantillon (3) avec l'élément de délimitation d'échantillon (1),
- remplir les pores (2) de l'élément de délimitation d'échantillon (1) avec un milieu d'immersion (4) et/ou avec un milieu échantillon (3),
- mouiller l'élément de délimitation d'échantillon (1) avec un milieu d'immersion (4),
- mettre un objectif à immersion (5) en contact avec le milieu d'immersion (4) et
- observer l'échantillon (3) par détection d'au moins un faisceau du rayonnement d'observation (9) à travers l'objectif à immersion (5) et à travers l'élément de délimitation de l'échantillon (1).

6. Procédé de microscopie selon la revendication 5, **caractérisé en ce qu'**un échantillon (3) noyé dans un milieu d'enrobage (15) est fourni comme échantillon (3) .

7. Microscope (6) selon la revendication 6, **caractérisé par**

- un porte-lame (8) destiné à maintenir une lame (7), la lame (7) étant pourvue d'un élément de délimitation d'échantillon (1) selon l'une des revendications 1 à 3,
- un dispositif d'échange de milieu d'immersion (18), le dispositif d'échange de milieu d'immersion (18) comprenant
- une alimentation en milieu d'immersion (20) destiné à alimenter un élément de délimitation d'échantillon (1) selon l'une des revendications 1 à 4 en milieu d'immersion (4),
- une unité de pompage (19) destinée au transport commandé du milieu d'immersion (4) depuis un récipient de stockage jusqu'à l'élément de délimitation d'échantillon (1) par le biais de l'alimentation en milieu d'immersion (20) et
- une unité de commande (21) destinée à commander l'unité de pompage (19).

Fig. 1

Fig. 2

Fig. 3

Fig. 4

Fig. 5

Fig. 6

Fig. 7a

Fig. 7b

Fig. 7c

EP 3 368 935 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1472294 A
- DE 2655041 C2
- DE 102013107297 A1
- US 20070128069 A1
- DE 102011076238 A1
- US 20130170044 A1
- US 20140334006 A1
- DE 102013107298 A1
- US 20030229189 A1

**In der Beschreibung aufgeführte Nicht-Patentliteratur**

- **YUN-SUK NAM et al.** hick, three-dimensional nanoporous density-graded materials formed by optical exposures of photopolymers with controlled levels of absorption. *APPLIED OPTICS,* 01. September 2007, vol. 46, 6350-6354
- Porous Polymer Films with Gradient-Refractive-Index Structure for Broadband and Omnidirectional Antireflection Coatings. **XIAO LI et al.** ADVANCED FUNCTIONAL MATERIALS. WILEY - V C H VERLAG GMBH & CO. KGAA, 22. Januar 2010, vol. 20, 258-265
- Porous and reconstructed Glasses. **T. H: ELMER.** Engineered Materials Handbook. 1992, vol. 4, 427-432